Europäisches Patentamt

**European Patent Office**

**Office européen des brevets**

(11) Numéro de publication: **0 161 124**

**A1**

(12) **DEMANDE DE BREVET EUROPEEN**

(21) Numéro de dépôt: **85400491.8**

(22) Date de dépôt: **14.03.85**

(51) Int. Cl.⁴: **G 01 P 3/488**
**G 01 D 5/244**

(30) Priorité: **05.04.84 FR 8405354**

(43) Date de publication de la demande:
**13.11.85 Bulletin 85/46**

(84) Etats contractants désignés:
**BE DE GB IT**

(71) Demandeur: **DUCELLIER ET CIE**
**3/5 Voie Félix Eboué**
**F-94000 Creteil(FR)**

(72) Inventeur: **Marchal, Michel**
**25, Rue Ronsard**
**F-91470 Limours(FR)**

(74) Mandataire: **Habert, Roger**
**VALEO Service Propriété Industrielle 21, rue Auguste Blanqui**
**F-93406 Saint-Ouen(FR)**

(54) Dispositif de détection simultanée de la vitesse et de la position angulaire d'un moteur à combustion interne.

(57) Ce dispositif est caractérisé en ce qu'il comporte un unique capteur inductif (5) dont la partie active montre deux cornes polaires (6a et 6b) devant lesquelles défilent respectivement les dents (3) du volant moteur (1) du véhicule et des cibles (4) repères de position de cylindre, disposées radialement à la périphérie d'un volant auxiliaire (2) qui jouxte le volant moteur (1) et qui peut être le moyeu dudit volant moteur.

_FIG.2_

EP 0 161 124 A1

0161124

# DISPOSITIF DE DETECTION SIMULTANEE DE LA VITESSE ET DE LA POSITION ANGULAIRE D'UN MOTEUR A COMBUSTION INTERNE.

La présente invention concerne un dispositif de détection de la vitesse et de la position angulaire d'un moteur à combustion interne à partir d'un disque à dents multiples, pour application notamment à l'allumage électronique ou au contrôle des moteurs à combustion interne.

Divers types de tels dispositifs sont connus à ce jour tel que comportant deux capteurs dont l'un mesure la vitesse de rotation du moteur par le comptage des dents de la couronne du volant moteur et l'autre mesure la position angulaire du vilebrequin par l'intermédiaire d'au moins un repère spécifique représentant à un angle prédéterminé près, le point mort haut (P.M.H.) d'au moins un piston sélectionné. Or le fait d'utiliser deux capteurs rend ces dispositifs onéreux et de temps de montage important.

D'autres dispositifs ne comportent qu'un seul capteur qui détecte soit des dents manquantes d'un volant spécifique, soit une dent singulière réalisée parmi les dents du volant moteur, ou enfin une pluralité de repères représentatifs des P.M.H, la fréquence de ces passages donnant une image de la vitesse du moteur.

Ces dispositifs présentent les inconvénients suivants: coût élevé d'un dispositif à deux capteurs,; coût important d'un volant spécifique auxiliaire, complexité et coût important du traitement spécifique d'une dent singulière de définition très voisine d'une dent réelle, mauvaise résolution de la vitesse par faible fréquence de passage des repères P.M.H notamment dans les phases de décélération et d'accélération.

La présente invention a pour but de remédier aux divers inconvénients mentionnés ci-dessus et concerne à cet effet un dispositif de détection simultanée de la vitesse et de la position angulaire d'un moteur à combustion interne à partir du volant moteur du véhicule qui comporte une couronne dont les dents défilent, en coopérant avec lui pour définir la vitesse de rotation du moteur, devant un capteur de proximité à la sortie duquel est connecté un circuit de traitement du signal capté, susceptible de piloter la distribution de l'allumage du moteur, dispositif caractérisé en ce qu'un volant auxiliaire jouxte le volant moteur et comporte à sa périphérie au moins

0161124

une cible repère de position d'au moins un cylindre du moteur fixée radialement à une distance latérale choisie des dents et suivant un angle choisi par rapport au P.M.H (point mort haut) d'au moins un cylindre et qui coopère également avec le capteur de proximité lors de la rotation du volant moteur.

La description qui va suivre en regard des figures annexées fera mieux comprendre comment l'invention peut être réalisée.

La figure 1 représente en vue frontale une réalisation préférentielle d'un dispositif de détection simultanée de la vitesse et de la position angulaire d'un moteur quatre temps à quatre cylindres, équipé d'un allumage à distributeur mécanique, conforme à l'invention.

La figure 2 représente un dispositif conforme à l'invention suivant la coupe II II de la figure 1.

La figure 3 représente une réalisation préférentielle du noyau magnétique d'un capteur inductif équipant un dispositif conforme à l'invention.

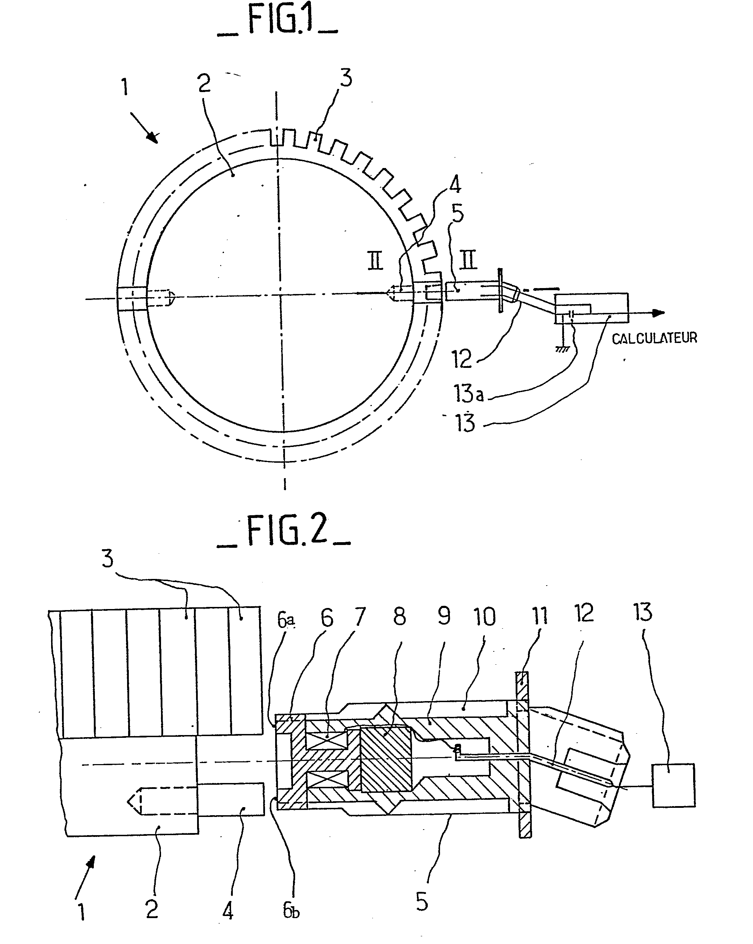

Le dispositif représenté à la figure 1 comporte de façon connue un volant moteur 1 équipé de la couronne comportant une pluralité de dents 3 et de son moyeu 2. Les dents 3 assurent d'une part le démarrage du moteur en coopération avec le démarreur du véhicule et d'autre part en coopération avec un capteur 5, la détermination de la vitesse du moteur par les signaux qu'elles engendrent dans le capteur.

Le capteur 5 est du type inductif comportant un noyau magnétique 6, une bobine réceptrice 7 et un générateur de flux 8 disposés dans un corps primaire 9 surmoulé par un élément 10 d'aspect général tubulaire, une semelle ou bride 11 assure la fixation du capteur 5 sur son support. Un connecteur 12 assure la liaison entre les éléments actifs du capteur 5 et un dispositif 13 de traitement des signaux engendrés par ledit capteur 5, les signaux issus de ce dispositif 13 sont ensuite dirigés vers un calculateur ne faisant pas partie de l'invention.

Conformément à l'invention et selon la figure 1 la cible de repère de position de cylindre se présente sous la forme de deux pions 4 dont le nombre correspond à la moitié du nombre de cylindres du moteur à quatre temps. Ces pions 4 sont disposés ......

radialement à la périphérie d'un volant auxiliaire 2 qui est dans cette réalisation particulière le propre moyeu du volant moteur 1 et sont respectivement représentatifs de la position des P.M.H à 2 $k\pi$ près, $k$ étant choisi de façon à ce que les pions 4 se situent entre deux dents 3. Les pions 4 sont positionnés longitudinalement à une distance choisie de la couronne de dents 3 selon la dimension de la partie active du noyau magnétique 6 du capteur 5 en tenant compte des dispersions des cotes d'engrènement du pignon de démarreur dans la couronne du volant moteur 1.

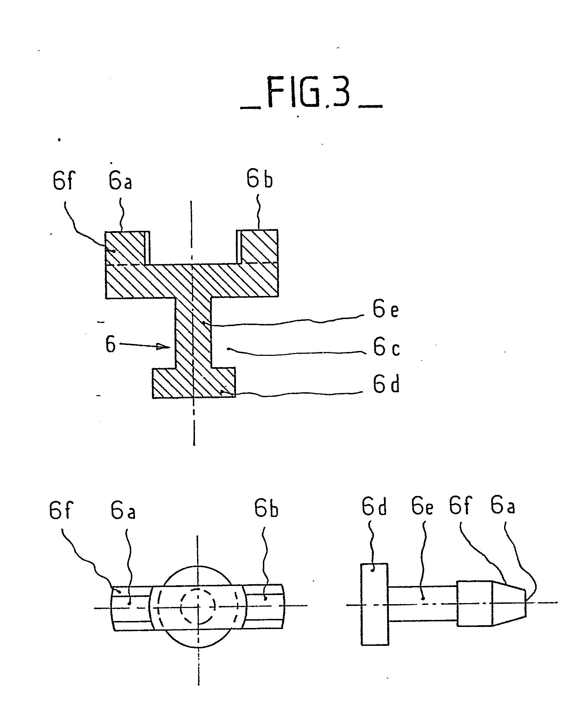

La figure 3 représente une réalisation préférentielle du noyau magnétique 6 du capteur 5 qui est à la fois collecteur et directeur de flux et se compose d'un collecteur de flux 6d contre lequel est plaqué le générateur de flux 8 qui est un aimant de deux cornes polaires 6a et 6b directrices symétriquement du flux qui sont reliées au collecteur de flux 6d par un corps 6e, l'ensemble formant un logement annulaire 6c dans lequel est réalisée la bobine réceptrice 7.

Lors de l'assemblage du dispositif la partie active de la corne polaire 6a est dirigée vers les dents 3 et celle de la corne polaire 6b vers les pions 4.

Le fonctionnement d'un tel capteur est alors le suivant : Dès la rotation du moteur le passage des dents 3 devant la corne polaire 6a entraîne une variation périodique de la réluctance du circuit magnétique, il en résulte dans l'intervalle angulaire séparant les deux pions 4 en sortie 12 du capteur 5 l'image électrique de chacune des dents 3 dont la fréquence mesure la vitesse instantanée de rotation du moteur. Le passage des pions 4 devant la corne polaire 6b entraîne une variation de la réluctance normale du circuit magnétique vue par le capteur 5 entre deux dents 3, l'entrefer entre la corne polaire 6a et le creux de la denture étant alors compensé par la présence d'un pion 4. Cette compensation de la longueur de l'entrefer entraîne à la limite un entrefer équivalent constant entre deux dents successives de la couronne d'où un signal modifié en fréquence et en amplitude du passage d'un pion 4 devant le capteur 5. Ainsi chacun des passages d'un pion 4 sous la corne polaire 6b est vue en sortie de capteur comme l'absence d'un creux de denture ou comme l'image d'une dent singulière aisément discriminable, soit en fréquence soit en amplitude, soit éventuellement les deux suivant le circuit électronique 13 utilisé.

Ce circuit électronique 13 dont le rôle est de traiter le signal capté comporte suivant le mode préféré pour une discrimination en fréquence des moyens, tels que capacitifs, qui conditionnent en fonction de la fréquence le déphasage relatif entre le signal fondamental des dents 3 et le signal crée par les pions 4 compte tenu de l'inductance et de la capacité propre du bobinage 7 du capteur sur son noyau 6, de sa charge ohmique et des pertes fer du noyau 6.

Afin d'obtenir un nombre d'images électriques des dents dans l'intervalle angulaire de deux pions 4 successifs exactement égal au nombre de dents comptées entre ces pions, le déphasage relatif entre le signal fondamental délivré par les dents 3, et le signal délivré par les pions 4 sera au plus égal à la moitié de la période dudit signal fondamental quelle que soit la fréquence de rotation du moteur.

Il est bien évident que cette réalisation n'est donné qu'à titre d'exemple et que de nombreuses variantes peuvent y être apportées.

En effet la cible repère de position de cylindre peut être soit sous la forme de pions, soit sous la forme de bossages, se trouver soit alignée avec une dent 3 de la couronne ou entre deux dents ou chevaucher plusieurs dents. Le nombre de ces repères sera défini par le type d'allumage équipant le moteur, et le type du moteur utilisé c'est à dire que pour un moteur équipé d'un allumage à distributeur statique une seule cible sera nécessaire ; Pour un moteur équipé d'un allumage à distributeur dynamique, c'est à dire de type classique, le nombre de cibles sera équivalent à la moitié de celui des cylindres pour un moteur à quatre temps, et à celui des cylindres pour un moteur à deux temps.

Le noyau magnétique 6 représenté sans entrefer dans notre réalisation préférentielle peut être réalisé en plusieurs éléments et peut être soit en acier, en fer doux, en fer fritté, en tôles au silicium ou en ferrite. Les cornes 6a et 6b peuvent être jointives au centre de la partie active, c'est à dire frontale dirigée vers les cibles, du noyau 6 et ainsi se présenter suivant une bande continue qui peut être biseautée, de manière

0161124

à ne présenter qu'une faible surface active frontale, forme biseautée 6f que peuvent avoir aussi les cornes polaires 6a et 6b lorsqu'elles ne sont pas jointives et leur surface active peut être plane et se trouver dans des plans différents. Le capteur peut bien sûr être radialement orienté par rapport au volant 1, tel que représenté à la figure 1 mais peut aussi être incliné par rapport à cette direction.

Le générateur de flux 8 peut être constitué soit par au moins un aimant en ferrité, soit par au moins un élément en matériaux aimantés tels que du "Triconal" soit par au moins un aimant en terre rare tel que "Samarium Cobalt", soit par une bobine excitatrice, disposée autour d'un matériau magnétique, dans ce dernier cas les bobines réceptrice et excitatrice peuvent être soit complètement dissociées, soit reliées par un point commun ou même être une seule et même bobine.

Les moyens d'ajustement du déphasage relatif entre le signal créé par les dents 3 et celui créé par la cible repère de position de cylindre, faisant partie du circuit 13 peuvent se présenter sous la forme d'au moins un condensateur 13a, tel que représenté à la figure 1 et qui peut être ainsi aisément incorporé dans le capteur 5 lui-même. De plus si les bobines excitatrice et réceptive sont elles mêmes capacitives ou si la charge résistive du capteur 5 est faible ou la combinaison des deux, ces moyens d'ajustement capacitifs ne sont pas indispensables.

Les signaux délivrés par le capteur 5 peuvent être indifféremment exploités soit en mode commun, soit en mode différentiel, modes connus.

L'adoption d'une disposition géométrique telle que décrit ci-dessus avec tout autre type de capteurs tels que, à effet Hall, à courant de Foucault, optique sont autant de combinaisons rentrant dans le cadre de l'invention.

0161124

REVENDICATIONS

1.- Dispositif de détection simultanée de la vitesse et de la position angulaire d'un moteur à combustion interne à partir du volant moteur (1) du véhicule qui comporte une couronne dont les dents (3) défilent, en coopérant avec lui pour définir la vitesse de rotation du moteur, devant un capteur de proximité (5) à la sortie duquel est connecté un circuit (13) de traitement du signal capté, susceptible de piloter la distribution de l'allumage du moteur, dispositif caractérisé en ce qu'un volant auxiliaire (2) jouxte le volant moteur (1) et comporte à sa périphérie au moins une cible repère de position d'au moins un cylindre du moteur, fixée radialement à une distance latérale choisie des dents (3) et suivant un angle choisi par rapport au P.M.H (point mort haut) d'au moins un cylindre et qui coopère également avec le capteur de proximité (5) lors de la rotation du volant moteur (1).

2.- Dispositif selon la revendication 1, caractérisé en ce que le capteur de proximité (5) est du type constitué d'une bobine réceptrice (7), d'un générateur de flux (8) et d'un noyau magnétique (6) remarquable en ce que sa partie active, devant laquelle défilent les dents (3) et les cibles de repère de cylindre, se présente sous la forme de deux cornes polaires (6a et 6b) solidaires, écartées d'un espace équivalent à celui défini entre les dents (3) du volant moteur (1) et la cible de repère de position de cylindre.

3.- Dispositif selon la revendication 2 caractérisé en ce que les cornes polaires (6a et 6b) sont jointives au centre de la partie active du noyau magnétique (6).

4.- Dispositif selon la revendication 2 caractérisé en ce que le générateur de flux (8) est constitué d'au moins un élément en matériau magnétisé.

5.- Dispositif selon la revendication 2 caractérisé en ce que le générateur de flux (8) est constitué d'une bobine disposée autour d'un matériau magnétique.

6.- Dispositif selon la revendication 1 caractérisé en ce que le volant auxiliaire (2) est le propre moyeu du volant moteur (1).

7.- Dispositif selon la revendication 1 caractérisé en ce que la cible de repère de position de cylindre est un pion (4) aligné avec une des dents (3) du volant moteur (1).

8.- Dispositif selon la revendication 1 caractérisé en ce que la cible de repère de position de cylindre est un pion (4) aligné avec un creux qui sépare deux dents (3) consécutives du volant moteur (1).

9.- Dispositif selon la revendication 1 caractérisé en ce que la cible de repère de position de cylindre chevauche au moins deux dents (3) successives du volant moteur (1).

10.- Dispositif selon la revendication 1 caractérisé en ce que la cible de repère de position de cylindre se compose de plusieurs pions (4) alignés entre plusieurs creux successifs des dents (3) du volant moteur (1).

11.- Dispositif selon la revendication 1 caractérisé en ce que la cible de repère de position de cylindre se compose de plusieurs pions (4) successifs alignés alternativement avec un creux et une dent (3) successifs du volant moteur (1).

12.- Dispositif selon la revendication 1 caractérisé en ce que le volant auxiliaire (2) comporte sur sa périphérie une pluralité de cibles de repère de cylindre dont le nombre correspond à la moitié du nombre de cylindres d'un moteur, du type dit à quatre temps, équipé d'un tel dispositif.

13.- Dispositif selon la revendication 1 caractérisé en ce que le volant auxiliaire (2) comporte sur sa périphérie une pluralité de cibles de repère de cylindre dont le nombre correspond au nombre de cylindres d'un moteur, du type dit à deux temps, équipé d'un tel dispositif.

14.- Dispositif selon la revendication 1 caractérisé en ce que le circuit (13) de traitement du signal capté comporte des moyens capacitifs (13$\underline{a}$) d'ajustement du déphasage relatif entre le signal crée par les dents (3) et celui crée par la cible de repère de position de cylindre.

15.- Dispositif selon la revendication 14, caractérisé en ce que les moyens capacitifs (13$\underline{a}$) comportent au moins un condensateur susceptible d'être incorporé dans le capteur (5).

16.- Dispositif selon la revendication 14 caractérisé en ce que les moyens capacitifs (13$\underline{a}$) sont constitués par les bobines elles-mêmes.

1/2

0161124

_ FIG.1 _

_ FIG.2 _

CALCULATEUR

_FIG.3_

6f  6a          6b

6e
6 →          6c
6d

6f   6a        6b        6d   6e  6f  6a

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | EP-A-0 080 056 (VACUUM SCHMELZE) <br> * Page 2, ligne 14 - page 3, ligne 7; figure 1 * | 1 | G 01 P 3/488 <br> G 01 D 5/244 |
| A | | 2-5,7, 8 | |
| Y | DE-A-2 228 985 (RENAULT, PEUGEOT) <br> * Page 5, ligne 23 - page 6, ligne 18; figure 1 * | 1 | |
| A | | 6-13 | |
| A | US-A-4 262 526 (MAKITA et al.) <br><br> * Colonne 2, lignes 32-63; figure 1 * | 1,6-8, 14,15 | DOMAINES TECHNIQUES RECHERCHES (Int. Cl.4) |
| A | DE-A-3 132 549 (BOSCH) <br><br> * Page 8, lignes 1-5; figure 1 * | 1,2,6-8 | G 01 P <br> G 01 D |

Le présent rapport de recherche a été établi pour toutes les revendications

| Lieu de la recherche | Date d'achèvement de la recherche | Examinateur |
|---|---|---|
| LA HAYE | 11-07-1985 | HANSEN P. |